# EUROPEAN PATENT APPLICATION

(11) **EP 3 073 719 A1**
(43) Date of publication of application: **28.09.2016**
(21) Application number: 16161988.7
(22) Date of filing: 23.03.2016
(51) Int. Cl.: H04M 1/725, G06F 1/16

(54) **ELECTRONIC DEVICE AND CONNECTOR THEREOF**

(30) Priority: 23.03.2015 KR 20150040194
(71) Applicant: Samsung Electronics Co., Ltd., Gyeonggi-do 16677 (KR)
(72) Inventor: Kim, Sangjun, Incheon (KR)
(74) Representative: Nederlandsch Octrooibureau

(57) **Abstract**

Various embodiments of the present disclosure relate to an electronic device. The electronic device includes a body; and a cover that detachably connected to the body, wherein the body includes a recess, wherein the cover includes a protrusion configured to have at least one device mounted thereon; and wherein the protrusion and the at least one device protrude into the recess.

## Description

### TECHNICAL FIELD

Various embodiments of the present disclosure relate to an electronic device that includes an external device, and a connector thereof.

### BACKGROUND

An electronic device may refer to a communication device that allows a user to store various pieces of information and to enjoy multimedia services (e.g., to enjoy a game or a video image) as well as to use a communication function (a voice call or message transmission) while the user carries the electronic device.

Adding a digital diary function or a multimedia function to the electronic device enables the execution of various contents of applications. These applications can include a game or multimedia service, or even connection with a banking business (e.g., making/receiving payments, via a payment system, such as a credit card), etc. As electronic devices are reduced in size, made thinner, and lighter, the electronic device can be equipped with a security function that enables the multimedia function for enjoying the game or the video image, a simple business processing function that includes internet or mail transmission/reception, as well as a communication function.

Such an electronic device can be provided with connection structures to connect various external devices (i.e., devices to be added in order to expand the functions of the electronic device). The above-mentioned external devices may include, as an additional device related to sound, an earphone, a headphone, a wired/wireless headset, a credit card reader, or the like. Through the external devices related to sound, the user may enjoy music, accept a credit card, or may easily make a call or the like.

When the user wants to listen to music by using, for example, a wired earphone among the external additional devices, the user may connect the plug of the earphone to an earphone socket or a connector that exists on the electronic device in order to use the earphone. In addition, the user may make a call with a counterpart or may listen to music by using, for example, a wireless headset among the external additional devices. A Bluetooth method or the like may be used for wireless communication. If the user wishes to accept a credit card payment, the user can attach the credit card reader to the electronic terminal. However, having to carry the external additional devices together with the electronic device in order to use them, can be inconvenient.

### SUMMARY

Various embodiments of the present disclosure are intended to provide an electronic device, in which one or more external devices are mounted on a cover and are coupled to be capable of being accommodated in a battery slot of the body of the electronic device so that the electronic device is advantageously slimmed even though the electronic device is provided with the external devices. Various embodiments of the present disclosure are also intended to provide a connector of the electronic device.

In addition, various embodiments of the present disclosure are intended to provide a slim electronic device, in which one or more external devices are mounted on a cover and are configured to be capable of being accommodated in the body of the electronic device, and to provide a connector of the electronic device.

In addition, various embodiments of the present disclosure are intended to provide a slim electronic device, in which a plurality of external devices, which are mounted on a cover, are capable of being mechanically and electrically connected to each other by using magnetic bodies, and to provide a connector of the electronic device.

Further, various embodiments of the present disclosure are intended to provide an electronic device, in which one or more electronic devices are exchangeably mounted so that the electronic device can be mounted with various external devices.

Moreover, various embodiments of the present disclosure are to provide an electronic device, in which a magnetic body performs an electric signal connection function between external devices.

Various embodiments of the present disclosure provide an electronic device includes a body and a cover that detachably connected to the body. The body includes a recess, and the cover includes a protrusion configured to have at least one device mounted thereon; and wherein the protrusion and the at least one device protrude into the recess.

Various embodiments of the present disclosure provide an electronic device. The electronic device includes a body rear case and a recess provided on the body rear case. The recess is divided into a battery accommodation space and an external device accommodation space.

Various embodiments of the present disclosure provide a connector of an electronic device. The connector may include a battery cover of the electronic device and a plurality of devices mounted on the battery cover. The devices can be electrically connected to each other by a plurality of magnetic bodies

### BRIEF DESCRIPTION OF THE DRAWINGS

The above and other aspects, features, and advantages of the present disclosure will be more apparent from the following detailed description taken in conjunction with the accompanying drawings, in which:
FIG. 1 is a perspective view illustrating the front face of an electronic device according to various embodiments of the present disclosure;
FIG. 2 is a perspective view illustrating the rear face of an electronic device according to various embodiments of the present disclosure;
FIG. 3 is a view illustrating a battery slot that is provided on the rear face of an electronic device according to various embodiments of the present disclosure, from which a cover is removed;
FIG. 4 is a view illustrating a state in which a battery is accommodated in the battery slot of the electronic device, according to various embodiments of the present disclosure, from which a cover is removed;
FIG. 5 is a view illustrating a battery slot that is provided on the rear face of an electronic device, according to various embodiments of the present disclosure, from which the cover is removed;
FIG. 6 is a view illustrating a cover according to various embodiments of the present disclosure;
FIG. 7 is a cross-sectional view illustrating the cover according to various embodiments of the present disclosure;
FIG. 8 is a cross-sectional view partially illustrating a state in which the cover is coupled to a body according to various embodiments of the present disclosure;
FIG. 9 is a plan view illustrating a state in which two external devices are coupled to each other according to various embodiments of the present disclosure;
FIGS. 10A and 10B are views illustrating an arrangement of magnetic bodies that are arranged on the facing surfaces of first and second external devices, respectively, according to various embodiments of the present disclosure; and
FIGS. 11A and 11B are views illustrating an arrangement of magnetic bodies that are arranged on the facing surfaces of first and second external devices, respectively, according to various embodiments of the present disclosure.

### DETAILED DESCRIPTION

The disclosure is described with reference to the accompanying drawings. The disclosure may be changed and may include various examples, and specific examples are described and related detailed descriptions are made in the specification. However, it should be understood that the various examples of the disclosure are not limited to a specific embodied form. In the drawing, like reference numerals are used for like elements.

Expressions such as "include" or "may include", etc. that may be used in the disclosure indicate existence of a disclosed relevant function, operation, or element, etc., and do not limit additional one or more functions, operations, or elements, etc. Also, it should be understood that terminologies such as "include" or "have", etc. in the disclosure are intended for designating existence of a characteristic, a number, a step, an operation, an element, a part, or a combination of these described on the specification and do not exclude in advance existence or addition possibility of one or more other characteristics, numbers, steps, operations, elements, parts, or a combination of these.

Expression such as "or", etc. in the disclosure includes a certain and all combinations of words listed together. For example, "A or B" may include A and may include B, or include both A and B.

In the disclosure, expressions such as "1st", "2nd", "first" or "second", etc. may modify various elements of the disclosure but do not limit relevant elements. For example, the expressions do not limit sequence and/or importance, etc. of relevant elements. The expressions may be used for discriminating one element from another element. For example, both a first user apparatus and a second user apparatus are all user apparatuses, and represent different user apparatuses. For example, a first element may be named as a second element without departing from the scope of the disclosure, and similarly, the second element may be named as the first element.

When it is mentioned that a certain element is "connected to" or "accesses" another element, it should be understood that the element may be directly connected to another element or may directly access another element, but still another element may exist in the middle. In contrast, when it is mentioned that a certain element is "directly connected to" or "directly accesses" another element, it should be understood that still another element does not exist in the middle.

Terminology used in the disclosure is used for explaining only a specific example and is not intended to limit the disclosure. Unless clearly expressed otherwise, expression of the singular includes expression of the plural.

Unless defined differently, all terminologies used herein including technological or scientific terminologies have the same meaning as that generally understood by a person of ordinary skill in the art to which the disclosure belongs. It should be understood that generally used terminologies defined by a dictionary have meaning coinciding with meaning on context of a related technology, and unless clearly defined in the disclosure, they are not understood as an ideal or excessively formal meaning.

An electronic device of disclosure may be a device including a communication function. For example, an electronic device may include at least one of a smartphone, a tablet personal computer (PC), a mobile phone, a video phone, an e-book reader, a desktop PC, a laptop PC, a netbook computer, a Personal Digital Assistant (PDA), a Portable Multimedia Player (PMP), an MP3 player, a mobile medical device, a camera, or a wearable device (e.g., a head-mounted-device (HMD) such as electronic glasses, an electronic clothing, an electronic bracelet, an electronic necklace, an electronic accessory, an electronic tattoo, or a smartwatch).

According to certain examples, an electronic device may be a smart home appliance having a communication function. A smart home appliance may include, for example, at least one of a television, a Digital Video Disk (DVD) player, an audio, a refrigerator, an air conditioner, a cleaner, an oven, an electronic range, a washing machine, an air purifier, a set-top box, a TV box (e.g., Samsung HomeSync^{™}, Apple TV^{™}, or Google TV^{™}), game consoles, an electronic dictionary, an electronic key, a camcorder, or an electronic frame.

According to certain examples, an electronic device may include at least one of various medical devices (e.g., Magnetic Resonance Angiography (MRA), Magnetic Resonance Imaging (MRI), Computed Tomography (CT), a shooting device, an ultrasonic device, etc.), a navigation device, a Global Positioning System (GPS) receiver, an event data recorder (EDR), a flight data recorder (FDR), an automobile infotainment device, electronic equipment for a ship (e.g., a navigation device for a ship, a gyro compass, etc.), an avionics, a security device, or a robot for an industrial use or a home use.

According to certain examples, an electronic device may include at least one of a furniture or a portion of a building/structure including a communication function, an electronic board, an electronic signature receiving device, a projector, or various measurement devices (e.g., waterworks, electricity, gas, or radio wave measuring device, etc.). An electronic device according to the disclosure may be a combination of one or more of the above-described devices. Also, it will be apparent to one skilled in the art that the electronic device examples of the disclosure are not limited to the above-described devices.

An electronic device according to various examples of the disclosure is described with reference to the accompanying drawings. A terminology of a user used in various examples may indicate a person who uses an electronic device or a device (e.g., an artificial intelligence electronic device) that uses the electronic device.

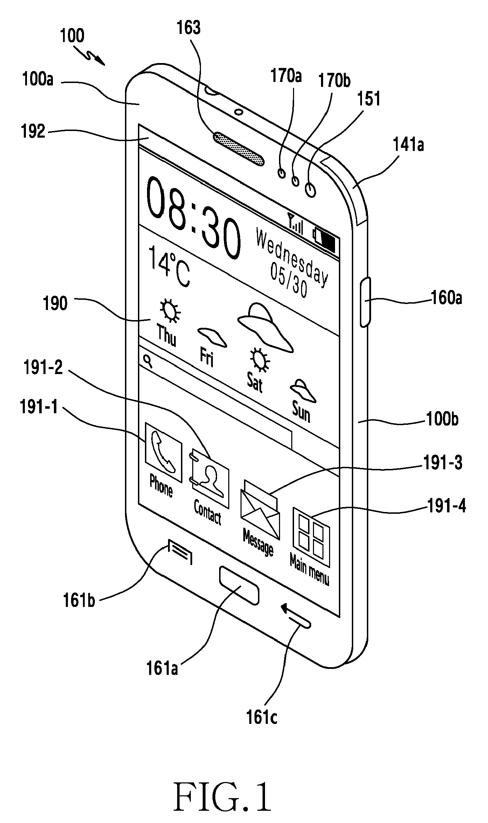

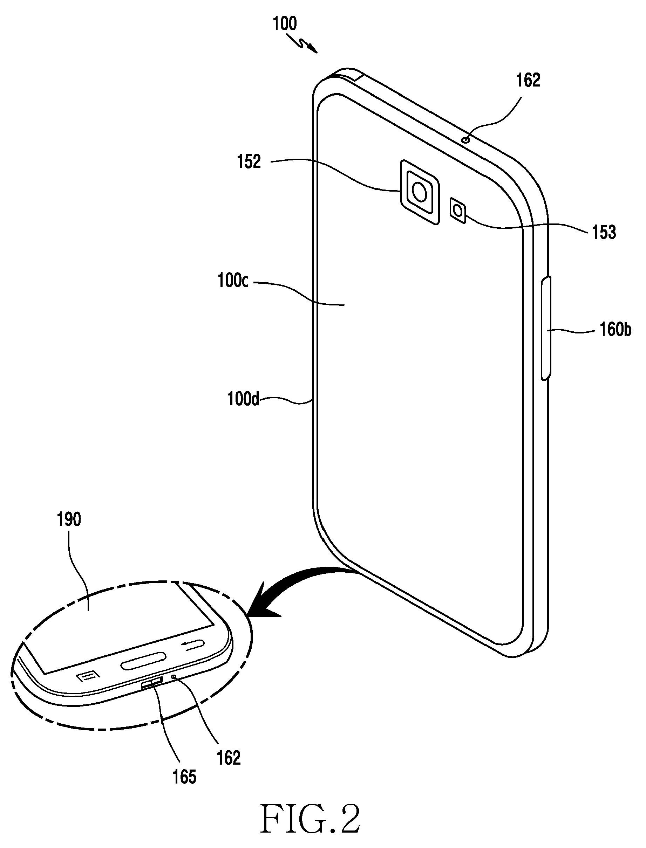

FIG. 1 is a perspective view illustrating the front face of an electronic device according to various embodiments of the present disclosure. FIG. 2 is a perspective view illustrating a rear side of the electronic device according to various embodiments of the present disclosure.

A configuration of an electronic device will be described with reference to FIGS. 1 and 2. According to various embodiments, an electronic device 100 may include a touch screen 190 that is disposed on the center of the front face 100a thereof. The touch screen 190 may be formed in a large size to occupy a great portion of the front face 100a of the electronic device 100. FIG. 1 illustrates an example in which a main home screen is displayed on the touch screen 190. The main home screen refers to the first screen that is displayed on the touch screen 190 when the power of the electronic device 100 is turned on. In addition, when the electronic device 100 has several pages of different home screens, the main home screen may be the first home screen among the several pages of home screens. The home screen may display shortcut icons 191-1, 191-2, and 191-3 to execute frequently used applications, a main menu switching key 191-4, time, weather, or the like. The main menu switching key 191-4 may cause the main screen to be displayed on the touch screen 190. In addition, in the upper end of the touch screen 190, status bars 192 may be formed to indicate the statuses of the electronic device 100, such as a battery charge status, a received signal strength, and the current time. Below the touch screen 190, a home button 161a, a menu button 161b, and a back button 161c may be formed.

The home button 161a may cause the main home screen to be displayed on the touch screen 190. For example, when the home button 161a is touched in the state where a home screen, which is different from the main home screen, or the menu screen is displayed on the touch screen 190, the main home screen may be displayed on the touch screen 190. In addition, when the home button 161a is touched while applications are executed on the touch screen 190, the main home screen illustrated in FIG. 2 may be displayed on the touch screen 190. In addition, the home button 161a may be used in order to cause the touch screen 190 to display the most recently used application or a task manager.

The menu button 161b may provide a connection menu that may be used on the touch screen 190. The connection menu may include a widget addition menu, a background screen change menu, a retrieve menu, an edition menu, an environment setting menu, or the like. The back button 161c may cause the screen, which was executed just prior to the currently executed screen, to be displayed, or may cause the most recently used application to be terminated.

According to various embodiments, a first camera 151, an illuminance sensor 170a, and a proximity sensor 170b may be arranged on an edge of the front face 100a of the electronic device 100. A second camera 152, and a flash 153 may be arranged on the rear face 100c of the electronic device 100. The rear face 101c includes a back plate 101d.

According to various embodiments, for example, a power/reset button 160a, a volume button 160b , a terrestrial DMB antenna 141a for broadcasting reception, one or more mics 162, or the like may be arranged on the side faces 100b of the electronic device 100. The DMB antenna 141a may be fixed to the electronic device 100, or may be formed to be removable from the electronic device 100.

In addition, according to various embodiments, a connection port 165 may be formed on the lower end side face of the electronic device 100. The connection port 165 is formed with a plurality of electrodes, and may be connected to an external device via a wire. According to various embodiments, one or more external additional devices may be used by being connected to the electronic device.

Hereinafter, descriptions will be made on an electronic device according to various embodiments of the present disclosure and a connector thereof.

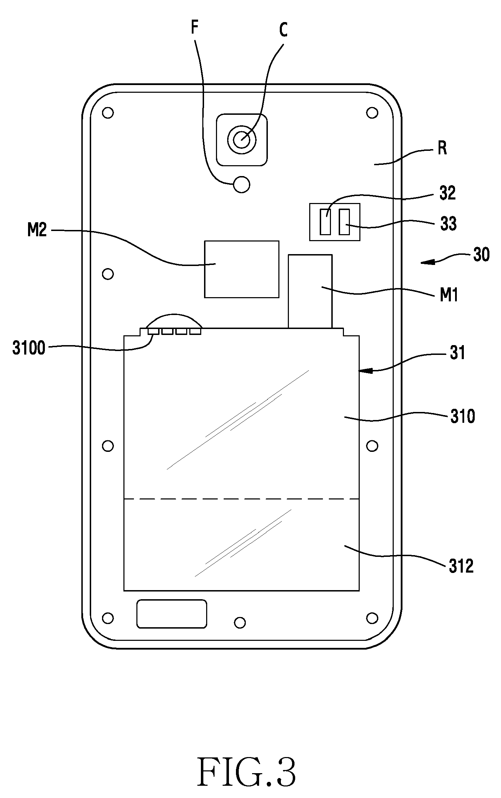

Referring to FIGS. 3 to 8, according to various embodiments of the present disclosure, the electronic device may be a device that is advantageously slimmed while being provided with one or more external devices. Figures 3-6 illustrate the electronic device without back plate 100d. The electronic device may include a body 30 and a cover (not shown) that can be detachably connected to the body 30 (Figure 3 shows the cover detached from the body). The cover 40 can be attached to/detached from the rear face of the body 30. Thus, the cover 40 may be referred to as a rear cover, an accessory cover, or a battery cover. A coupling structure is not illustrated, which allows the cover 40 to be detachably connected from the body 30. The coupling structure may be configured by a combination of known protrusions and recesses.

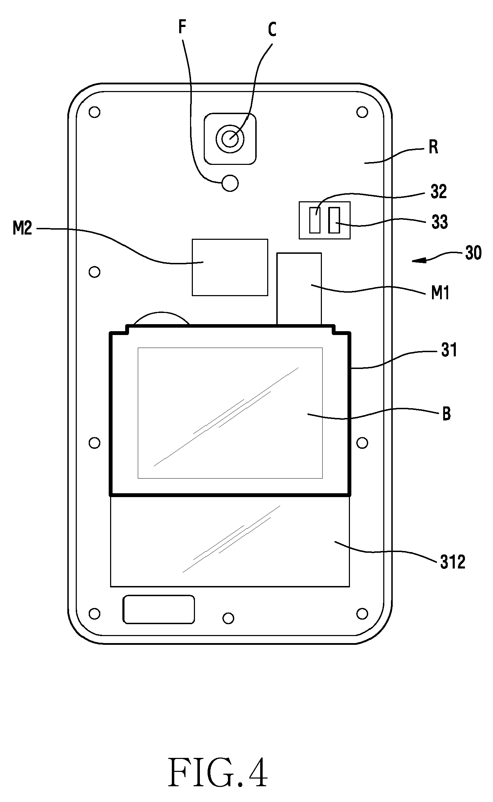

FIG. 3 is a view illustrating a battery slot that is provided on the rear face of an electronic device according to various embodiments of the present disclosure, from which a cover is removed. The battery slot may be a recess provided on the rear face. FIG. 4 is a view illustrating a state in which a battery is accommodated in the battery slot of the electronic device, according to various embodiments of the present disclosure, from which a cover is removed.

Referring to FIGS. 3 and 4, according to various embodiments, the body 30 may be equipped with various electronic components. The body 30 may include a battery slot 31 at the rear case R side on the rear face to mount a battery B therein. The battery slot 31 is an opened space in which the battery is accommodated, and may be divided into two or more regions depending on the devices that are accommodated therein. The battery slot 31 may be formed as an opened space that is recessed in a predetermined depth from the outer face of the rear cover R.

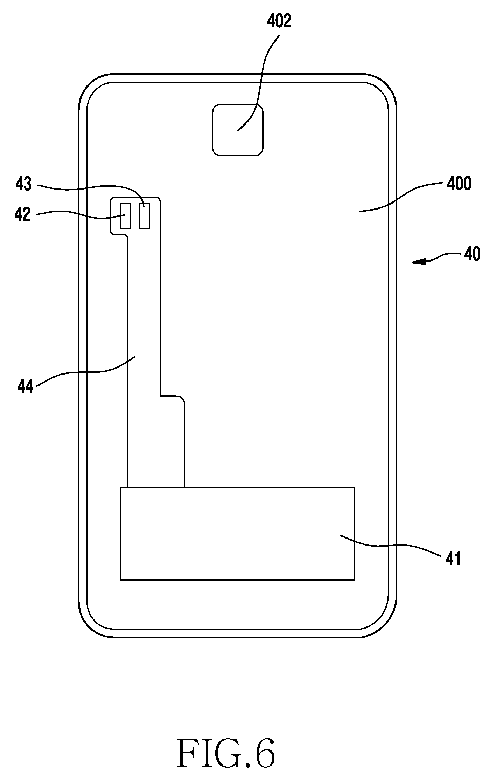

According to various embodiments, the battery slot 31 may be divided into first and second accommodation spaces 310 and 312. The first accommodation space 310 may be an opened space, in which the battery B is mounted, and the second accommodation space 312 may be an opened space, in which an external device 41 to be described later (see FIG. 6) is mounted. Each of the first and second accommodation spaces 310 and 312 are formed by separating a single opened space depending on the components that are accommodated therein, and may be configured in a shape where the bottom is closed by the rear case or a separate metal/thin film sheet and is surrounded by the rear case. On a side wall at a corner side of the first accommodation space 310, a plurality of connecting terminals 3100 may be arranged to be connected to the battery.

In addition, connection modules M1 and M2 may be arranged above the battery slot 31 and a SIM card and an SD card may be attached to/detached from the connection modules M1 and M2, respectively. A camera module C and a flash F may be disposed in the upper end region of the rear case R.

According to various embodiments, on the rear case R of the body 30, one or more connecting terminals 32 and 33 may be disposed to electrically connect one or more external devices to the body 30. One connecting terminal 32 may be a connecting terminal or a charging terminal to apply power to the external device. The other connecting terminal 33 may be a connecting terminal to transmit/receive data. When a cover 40 (see FIG. 6) is coupled to the body 30, each of the connecting terminals 32 and 33 may have elasticity so as to always maintain the connected state in relation to the connecting terminal to be described later (see FIG. 6). That is, each of the connecting terminals 32 and 33 may be provided in a clip-like shape, so that a free end for a connection has elasticity. Each of the elastic free ends may be arranged to slightly protrude from the surface of the rear case R. Each of the terminals may be a portion of the connector that electrically connects the body and the external devices.

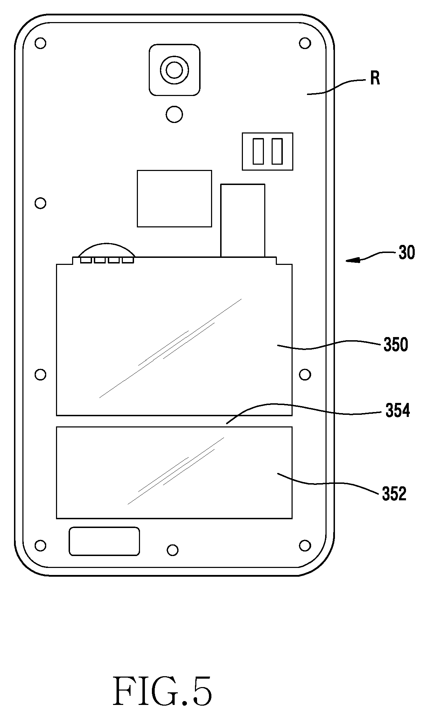

FIG. 5 is a view illustrating a battery slot that is provided on the rear face of an electronic device according to various embodiments of the present disclosure, from which the cover is removed.

Referring to FIG. 5, according to various embodiments, the body 30 may include first and second accommodation spaces 350 and 352, and the first and second accommodation spaces 350 and 352 may be configured to be independently and spatially separated from each other by a vertical separating wall 354. In FIG. 3, the first and second accommodation spaces 310 and 312 may be configured in a spatially communicating structure. In FIG. 5, the first and second accommodation spaces 350 and 352 may be configured in a spatially separated structure. The vertical separating wall 354 may be formed by being integrally injection-molded to the rear case R, or may be configured by coupling a separate plate to the battery slot. In addition, the vertical separating wall 354 may be formed to vertically protrude from the bottom of the battery slot to a predetermined height.

The cover 40 (see FIG. 6) may be detachably connected to the rear case R that is provided on the rear face of the body. The cover may be configured to be detachably connected in order to allow the battery B, which is mounted in the battery slot 31, to be removed. Upon being coupled to the rear case R, the cover 40 may be in the state of facing the rear case R.

Hereinafter, the configuration of a cover, which is detachably connected from a body, will be described with reference to the drawings.

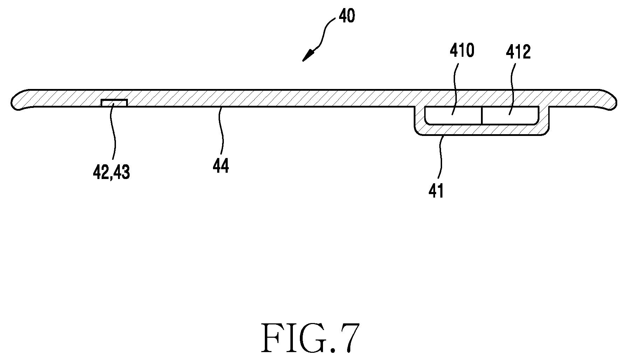

FIG. 6 is a view illustrating a cover according to various embodiments of the present disclosure. FIG. 7 is a cross-sectional view illustrating the cover according to various embodiments of the present disclosure.

Referring to FIGS. 6 and 7, according to various embodiments, the cover 40 may include an external device mounting portion 41, a protrusion, on which one or more external devices 410 and 412 may be mounted. The cover 40 includes an external face and an internal face. When the cover 40 is coupled to the body, the external face may be defined as a face that is seen to the outside and the internal face may be defined as a face that faces the rear case R.

The external devices 410 and 412 may be provided to protrude from the internal face 400 of the cover 40. When the cover 40 is coupled to the body 30, the external devices 410 and 412 may be seated in the second accommodation space 312 (see FIG. 3). The external devices 410 and 412 may be mounted in such a way as to be embedded in the external device mounting portion 41 that is provided on the cover 40.

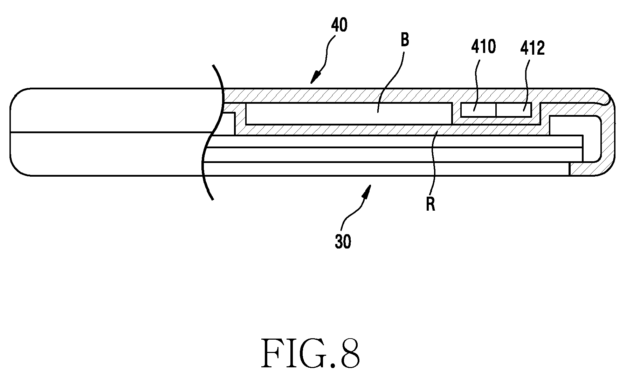

FIG. 8 is a cross-sectional view partially illustrating a state in which the cover is coupled to a body according to various embodiments of the present disclosure;

Referring to FIGS. 4 to 8, the external devices 410 and 412 may be electrically connected to the body 30. For this purpose, the electronic device may include a connector. The connector may include a plurality of connecting terminals and a flexible circuit portion 44.

The connecting terminals may include one or more first terminals 32 and 33 that are disposed on the rear case R of the body, and one or more second terminals 42 and 43 that are disposed on the internal face 400 of the cover 40. It is not necessary to limit the mounted number of the first terminals 32 and 33 or the second terminals 42 and 43 to two (2). Depending on the type of the external devices 410 and 412, a single first terminal and a single second terminal, or two or more first terminals and two or more second terminals may be arranged. When the cover 40 is coupled to the body 30, the first terminals 32 and 33 and the second terminals 42 and 43 are connected to each other, and the connected state may be always maintained. In order to always maintain the connected state, the first terminals 32 and 33 may be configured to have elasticity, and the second terminals 42 and 43 may be configured to have a flat connecting face. According to various embodiments, it is possible to confirm whether the cover is coupled to the electronic device or not based on the existence or non-existence of the resistance of the terminals so that the assembled state of the cover can be confirmed. Further, according to various embodiments, when the cover is coupled to the body, the electronic device may transmit a charging energy to the external devices by the terminals 32 and 33; 42 and 43, and the flexible circuit portion 44.

The first terminals 32 and 33 may be arranged in a region above the battery slot 31 on the rear case R of the body, and the second terminals 42 and 43 may be arranged on the internal face 400 of the cover to correspond to the first terminals 32 and 33. The second terminals 42 and 43 and the external devices 410 and 412 may be electrically connected to each other by the flexible circuit portion (Flexible Printed Circuit Board (FPCB)) 44. The flexible circuit portion 44 may extend between the external devices 410 and 412 and the second terminals 42 and 43. As will be described below, the flexible circuit portion 44 may include a charging terminal line and a data line.

The external devices 410 and 412 may be configured to be integral with the cover 40, or may be configured to be attachable to/detachable from the cover 40. When the external devices 410 and 412 are configured to be attachable/detachable, the external devices 410 and 412 may be exchanged with other external devices.

In addition, when the external devices 410 and 412 are integrally mounted on the cover 40, one or more external devices may be mounted. Various embodiments of the present disclosure will be described, assuming that two external devices are mounted, by way of an example. For example, the external devices may include additional devices that are related to sound. Descriptions will be made on an embodiment in which, for example, a Bluetooth module 410 and an earphone module 412 are configured as the external devices.

The external devices may include a Bluetooth module 410 (hereinafter, referred to as a "first module"), and an earphone module 412 (hereinafter, referred to as a "second module") that is connected to the first module 410. The first module 410 and the second module 412 may be electrically connected to each other and physically coupled to each other by using one or more magnetic bodies. In other words, the magnetic bodies perform dual functions. The magnetic bodies perform a component function for electrically connecting the first and second modules 410 and 412 to each other, as well as perform a component function of physically coupling the first and second modules 410 and 412 to each other by a magnetic force. The electric connection means that various data may be connected between the first and second modules 410 and 412, and the physical coupling function means that the first and second modules 410 and 412 may be coupled to each other as a single body. That is, the magnetic bodies, which are provided to the first and second modules 410 and 412, respectively, may be defined as components that perform dual functions.

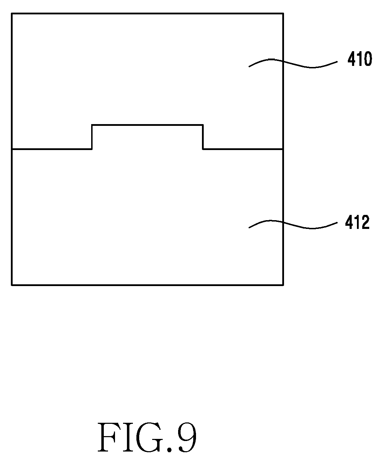

FIG. 9 is a plan view illustrating a state in which two external devices are coupled to each other according to various embodiments of the present disclosure.

Referring to FIG. 9, the physical coupling structure of each of the first and second modules may be provided as a concave-convex shape. By the concave-convex shape, the coupling positions of the first and second modules can be determined. For example, the first module 410 may have a surface that faces the second module (hereinafter, referred to as a "facing surface"), and the facing surface may be configured in a shape where two opposite side portions protrude and the central portion between the opposite side portions is recessed. To correspond to the shape of the facing surface, the second module 412 may have a surface that faces the first module (hereinafter referred to as a "facing surface"), and the facing surface may be configured in a shape where two opposite side portions are recessed and the central portion between the opposite side portions protrudes. The concave-convex shapes may be variously configured.

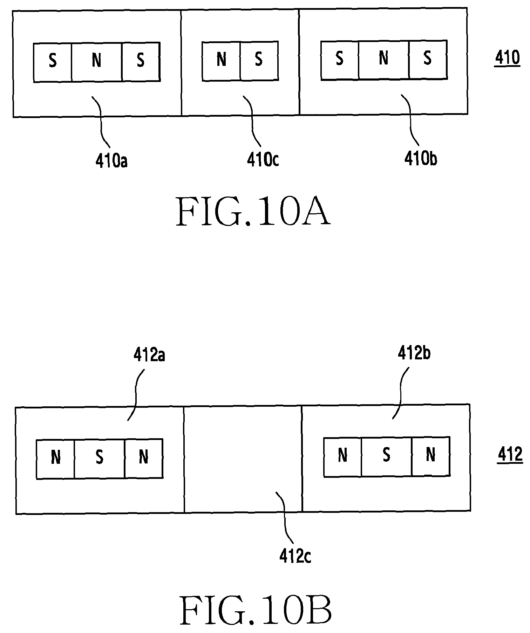

FIGS. 10A and 10B are views illustrating an arrangement of magnetic bodies that are arranged on the facing surfaces of first and second external devices, respectively, according to various embodiments of the present disclosure.

Referring to FIGS. 10A and 10B, the first and second modules 410 and 412 have facing surfaces that face each other when they are coupled to each other, and a plurality of magnetic bodies may be provided on first facing surfaces 410a to 410c of the first module 410. In addition, a plurality of magnetic bodies may be provided on first facing surfaces 412a to 412c of the second module 412. The plurality of magnetic bodies, which are provided on the first module 410, may be arranged such that terminals, each of which is provided to have a polarity, are exposed, and the plurality of magnetic bodies, which are provided on the second module 412, may be provided such that terminals are exposed, each of which has a polarity. All or some of the terminals, which are provided on each of the first and second modules 410 and 412, may be provided to have different polarities. This is because known magnets are attracted to each other only when they have different polarities. The magnetic bodies indicated by "N" may be magnetic bodies having the N-pole, and the magnetic bodies indicated by "S" may be magnetic bodies having the S-pole.

The first module 410 may have three faces, each of which may be provided with three magnetic bodies. The magnetic bodies may include first, second, and third magnetic bodies, and the third magnetic body may be disposed between the first and second magnetic bodies. Each of the first, second, and third magnetic bodies may be arranged such that its terminal is exposed. The second module may be provided with two magnetic bodies. The magnetic bodies may include first and second magnetic bodies, and the first and second magnetic bodies may be arranged to be opposite to each other. Each of the first and second magnetic bodies may be arranged such that its terminal is exposed.

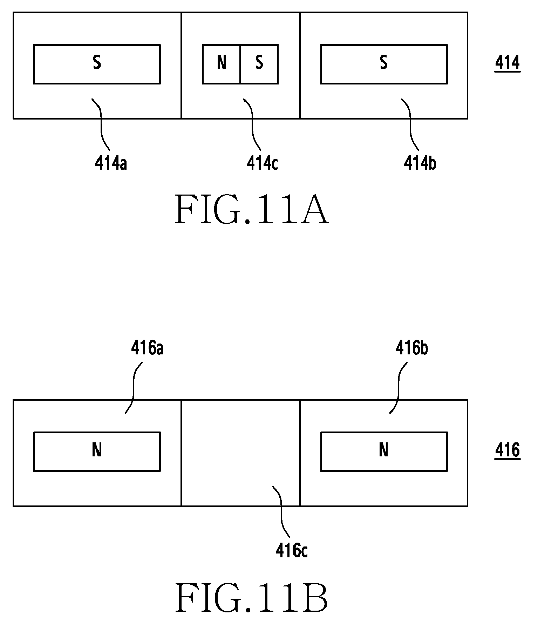

FIGS. 11A and 11B are views illustrating an arrangement of magnetic bodies that are arranged on the facing surfaces of first and second external devices, respectively, according to various embodiments of the present disclosure.

Referring to FIGS. 11A and 11B, the first and second modules 414 and 416 have facing surfaces when they are coupled to each other. A plurality of magnetic bodies may be provided on first facing surfaces 414a to 414c of the first module 414. In addition, a plurality of magnetic bodies may be provided on first facing surfaces 416a to 416c of the second module 416. The plurality of magnetic bodies, which are provided on the first module 414, may be arranged such that terminals, each of which is provided to have a polarity, are exposed, and the plurality of magnetic bodies, which are provided on the second module 416, may be provided such that terminals, each of which has a polarity, are exposed. All or some of the terminals, which are provided on each of the first and second modules 414 and 416, may be provided to have different polarities. This is because known magnets are attracted to each other only when they have different polarities. The magnetic bodies indicated by "N" may be magnetic bodies having the N-pole, and the magnetic bodies indicated by "S" may be magnetic bodies having the S-pole.

According to various embodiments, an electronic device may electrically connect external devices, which are provided on a cover, to the body thereof by a connector. In addition, the electronic device may allow voice information to be input using a mic or a Bluetooth mic, and when the voice information is input, data may be transmitted wirelessly by a Bluetooth module.

The "module" used in various embodiments of the present disclosure may refer to, for example, a "unit" including one of hardware, or a combination of hardware and either software, or firmware. The "module" may be interchangeable with a term, such as a unit, a logic, a logical block, a component, or a circuit. The "module" may be a minimum unit of an integrated component element or a part thereof. The "module" may be a minimum unit for performing one or more functions or a part thereof. The "module" may be mechanically or electronically implemented. For example, the "module" according to various embodiments of the present disclosure may include at least one of an Application-Specific Integrated Circuit (ASIC) chip, a Field-Programmable Gate Arrays (FPGAs), and a programmable-logic device for performing operations which have been known or are to be developed hereafter.

According to various embodiments, at least some of the devices (e.g., modules or functions thereof) or methods (e.g., operations) according to the various embodiments of the present disclosure may be implemented as, for example, instructions stored computer readable storage media in the form of programming modules. When the command is executed by one or more processors, the one or more processors may execute a function corresponding to the command. The computer-readable storage medium may be, for example, the memory 1430. At least a part of the programming module may, for example, be implemented (e.g., executed) by the processor. At least some of the programming modules may include, for example, a module, a program, a routine, a set of instructions or a process for performing one or more functions.

The computer readable recording medium may include magnetic media such as a hard disc, a floppy disc, and a magnetic tape, optical media such as a compact disc read only memory (CD-ROM) and a digital versatile disc (DVD), magneto-optical media such as a floptical disk, and hardware devices specifically configured to store and execute program commands, such as a read only memory (ROM), a random access memory (RAM), and a flash memory. In addition, the program instructions may include high class language codes, which can be executed in a computer by using an interpreter, as well as machine codes made by a compiler. The aforementioned hardware device may be configured to operate as one or more software modules in order to perform the operation of various embodiments of the present disclosure, and vice versa.

A module or a programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Further, some operations may be executed according to another order or may be omitted, or other operations may be added.

The embodiments of the present disclosure disclosed in the specification and the drawings are only particular examples proposed in order to easily describe the technical matters of the present disclosure and help with comprehension of the present disclosure, and do not limit the scope of the present disclosure. Therefore, in addition to the embodiments disclosed herein, the scope of the various embodiments of the present disclosure should be construed to include all modifications or modified forms drawn based on the technical idea of the various embodiments of the present disclosure.

## Claims

1. An electronic device comprising:
a body; and
a cover that detachably connected to the body,
wherein the body includes a recess,
wherein the cover includes a protrusion configured to have at least one device mounted thereon;
and
wherein the protrusion and the at least one device protrude into the recess.

2. The electronic device of claim 1, further comprising:
a device mounted onto the protrusion and seated in the recess.

3. The electronic device of claim 1, wherein the recess includes:
a first recess configured to receive a battery, and
a second recess configured to receive the device, and
wherein the first and second recesses are arranged parallel to each other without overlapping with each other,
and wherein the first and second recesses are spatially communicated with each other to be configured as a single space, or are spatially separated from each other by a vertical separating wall.

4. The electronic device of claim 3, wherein the device is electrically connected to the body by a connector, and
the connector includes:
at least one first terminal that is disposed in a portion of a rear face of the body;
at least one second terminal that is provided in a portion of an internal face of the cover to be connected to the first terminal when the cover is coupled to the body, and to maintain a connected state; and
a flexible circuit portion that is disposed on the internal face of the cover to connect the second terminal to the external device.

5. The electronic device of claim 1, further comprising:
a first device;
a second device; and
wherein the first and second devices are electrically connected to each other by using one or more magnetic bodies,
wherein the magnetic bodies cause the first and second devices to be coupled to each other due to polarities thereof, and electrically connect the first and second devices to each other to enable signal transmission.

6. The electronic device of claim 5, wherein the first and second devices include a Bluetooth module and an earphone module, respectively.

7. An electronic device comprising:
a body rear case; and
a recess provided on the body rear case,
wherein the recess is divided into a battery accommodation space and an external device accommodation space.

8. The electronic device of claim 7, wherein the external device accommodation space is positioned parallel to the battery accommodation space, rather than being stacked on the battery accommodation space.

9. A electronic device comprising:
a battery cover of the electronic device; and
a plurality of devices mounted on the battery cover,
wherein the devices are electrically connected to each other by a plurality of magnetic bodies.

10. The electronic device of claim 9, wherein the battery cover is detachably connected to the electronic device.

11. The electronic device of claim 9, wherein each of the devices is provided with the magnetic bodies so that the devices are coupled to each other by attractive force between the magnetic forces, each of the magnetic bodies transmitting an electric signal between the devices.

12. The electronic device of claim 11, wherein the devices are arranged such that the magnetic bodies are exposed on surfaces of the devices facing each other, the respective exposed magnetic bodies magnetically coupled to each, and depending on a contact state, the respective magnetic bodies electrically coupled to transmit data.

13. The electronic device of claim 9, wherein the devices include a device that is related to sound, and
each of the devices includes a Bluetooth module and an earphone module.

14. The electronic device of claim 9, wherein each of the magnetic bodies includes a neodymium magnet.

15. The electronic device of claim 9, wherein the devices have surfaces that face each other, and wherein the surfaces facing each other have at least one of a concave shape or a convex shape.
